# EUROPEAN PATENT APPLICATION

(11) **EP 1 890 231 A2**
(43) Date of publication of application: **20.02.2008**
(21) Application number: 07119845.1
(22) Date of filing: 30.09.2004
(51) Int. Cl.: G06F 9/445, G06F 9/48

(54) **Playback of audio-video content and an associated java application from an optical disc**

(30) Priority: 10.10.2003 EP 03292522
(62) Divisional of application: 04769545.7
(71) Applicant: Koninklijke Philips Electronics N.V., 5621 BA Eindhoven (NL)
(72) Inventor: Newton Philip, S., 5600 AE, Eindhoven (NL); Kelly, Declan, P., 5600 AE, Eindhoven (NL)
(74) Representative: Uittenbogaard, Frank

(57) **Abstract**

An optical storage carrier is loaded with applications implemented as Java objects that enable interactive services, e.g. gaming, interactive A/V content playback, web browsing. Each Java object includes at least three methods for setting the application in an inactive state, a paused state or an active state. The carrier is also loaded with a loader application that includes a main method. The loader application controls the respective lifecyles of all Java objects present on the carrier and controls the respective methods of the Java objects. The loader application only permits one Java object to run at a time. The lifecyle of the loader application is linked to the disc and the loader application is loaded in memory when the disc is inserted in the device and killed when the disc is removed. The device runs a Java virtual machine on top of which the loader application is configured to run. Since the lifecyle of the loader application is linked to the disc, the Java virtual machine runs for the time the disc is inserted into the device and is not killed when a Java object is either paused or killed.

## Description

The present invention is directed to the field of optical storage. The invention is particularly relevant to blue ray discs and players and their logical specifications.

BD-ROM (Blue Disc ROM) is the upcoming optical storage specification worked on by a consortium of consumer electronics, software companies and the entertainment industry for whom it is desirable to integrate the latest storage, playback and software technologies to develop the next carriers and players generation that combines both the opportunity of new user experiences and a high storage density. BD-ROM is the next Read-only optical disc standard, which utilizes a blue laser such that it is possible to obtain a capacity of at least 25GB per data layer. Optical standards may define both the physical and logical formats of carriers. The invention is directed to the logical format of optical carriers, i.e. the application layer on the disc, and the physical format will not be discussed herein. A primary predicted application for BD-ROM is High Definition Television however web connectivity and interactivity such as web browsing, chat applications or games are also within the scope of the standard.

The current draft of the BD-ROM standard specifies a movie mode where digital Audio/Video (A/V) data is experienced through interaction with movie objects. The concept of movie mode encompasses functionalities similar to Digital Versatile Disc, which mostly relate to the playing of A/V content. A movie object can initiate a playlist comprising a list of A/V sequences stored on the disc and also permits the content author to do some pre- and post-processing with regards to A/V playback. The movie mode also includes titles as the items that the user sees and can select to playback. An index table links the titles to the movie objects.

In addition to this A/V playback capability, interactive services will be available in the new optical media generation and a programming environment is needed to enable interactive applications to be present on the disc. Java™, a SUN technology, with its existing Virtual Machine, Application Programming Interfaces and libraries was seen by the industry consortium as a good candidate technology to permit the feasibility of interactive applications on optical storage carriers. However several issues arise in the adaptation of a Personal Computer environment to consumer electronics devices, the user expectations and experience being different.

A first issue is that software applications may contain errors that did not surface during development or testing and these undetected code errors should not prevent the BD-ROM from being read or else the BD-ROM player from running. Indeed the fact that an application unexpectedly stops should not cause the player to stop as well. A second issue, this one specific to Java, is that typically, in Java, one application runs on one instance of a Java virtual machine and stopping the application typically implies stopping the Java virtual machine as all hooks to the native platform have to be released. Stopping and starting a virtual machine means loading all class files related to the environment and this procedure can take up to thirty seconds. A delay in the order of seconds is however unacceptable in consumer electronics applications.

The inventors has thus sought a solution that alleviates these drawbacks and the well-known Multimedia Home Platform (MHP) programming environment has provided them with a basis to develop an environment where applications exhibit a similar lifecycle model as the one defined in MHP.

MHP is a Java-based standard for interactive television. In MHP an application can either run as a standalone application or it can implement a so-called Xlet interface. Xlets are typically small programs that perform simple functions such as electronic programming guides (EPGs), interactive games, enhanced content, managing the broadcast media pipeline, chat applications, menu listings and the like. Xlet is another name for Java applications and like applets, Xlets are controlled by the software that runs them. In the case of an applet, the underlying software is a browser or the appletviewer. In the case of an Xlet, the underlying software is in the digital television receiver, set-top box or any other consumer electronic device that supports the Java platform. An Xlet does not comprise a main method and implements a Xlet interface which defines the life cycle methods signatures of the Xlet. The Xlet interface defines life cycle methods to signal the following state changes: Create, Initialize, Start, Pause and Destroy. All Java TV implementations have an application manager that calls the lifecycle methods of Xlets to move one or more Xlets through their various application states.

For example, a viewer might be playing a game along with a game show and decides to check program listings. If the program listings and the game are both Xlets, the application manager in the receiver is signaled that an Xlet is present when the viewer selects the program listings. At this point, the application manager may pause the game Xlet, and the receiver downloads the program listings Xlet into the receiver. The application manager loads and starts the program listings Xlet.

Based on the Xlet concept, the inventors have implemented a similar type of applications for the BD-Rom environment (player and carrier). The invention is therefore directed to an optical storage carrier that includes at least one Java object application having a predefined lifecycle model. The lifecycle model defines at least three methods that when invoked cause the application to be in one of the following respective states: a paused state, an active state and an inactive state. The carrier also includes a loader application that is configured to run on a Java virtual machine. This loader application has a main method and a lifecycle linked to an insertion of the carrier into a scanning device and the loader application is further configured to control the lifecycle of the object application. The loader is also such that it controls the object application into the paused state or inactive state whenever another object application stored on the carrier is invoked.

The invention applies some concepts initially used in MHP to BD-Rom discs now loaded with at least one Java object application and a loader application. The Java object application and the loader application are in some aspects similar to the respective Java object application and application manager. In the invention, only the loader application includes a main method and the lifecycle of the object application is controlled by the loader application. The lifecycle of the loader application is linked to the insertion of the disc into a scanning device, which means that the loader application is loaded at startup when the disc is inserted and scanned, and later interrupted when the disc is ejected from the device. Thus, the loader application runs for the duration of the disc on the Java virtual machine and the Java virtual machine is as a result, not killed or restarted while the disc is in the device. One of the drawbacks associated with the booting of the Java virtual machine mentioned above is therefore alleviated. In addition, a specifics of the invention is that the loader application only permits one object application to run at a time and causes a first object application to go into a paused or inactive state if the user or the system invokes another object application while the first one is running. The invention differs from MHP on various aspects. First, in MHP more than one Xlet may run at the same time whereas the invention only permits one Java object application to run at a time and the loader application is stored on the disc with the Java object application and not in the player where the Java virtual machine is stored. An 30 advantage of the invention is to provide a reliable and well-accepted computing environment for the developers' community to develop applications for optical media.

The present invention will now be described in more detail, by way of examples, with reference to the accompanying drawings, wherein:
Fig. 1 shows the basic components of a Java environment;
Fig.2 shows the logical components of a disc/player system of the invention; and,
Fig.3 shows the methods and states of the lifecycle of a Java object application of the invention.

Elements within the drawings having similar or corresponding features are identified by like reference numerals.

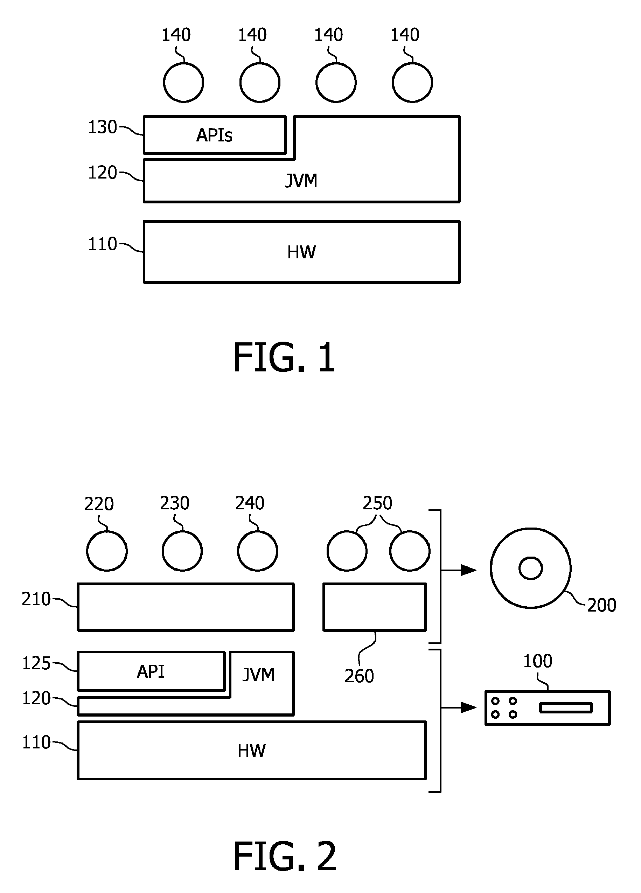

Fig.1 illustrates the basic elements of a typical Java environment. A typical Java environment comprises software components that run on a device's hardware 110. Device may be a personal computer or a consumer electronics device such as a web tablet, a personal digital assistant, a game console, a set-top box and the like. The Java technology was designed to enable the same applications to execute on heterogeneous networks and on a variety of hardware architectures. The Java virtual machine (VM) 120 is the first component of the Java platform that enables an architecture-neutral technology. Java VM 120 is one of the two main components of the portable Java technology platform, for which Java programming language compilers can generate code. Java VM 120 can be modified or ported for adaptation to a specific hardware 110. The Java platform, which is software only, further includes, in addition to Java VM 120, the Java Application Programming Interface (API) 130. Java API 130 is a large collection of ready-made software components that provide many useful capabilities, such as graphical user interface (GUI), connectivity, I/O, etc. Java API 130 is grouped into libraries of related classes and interfaces; these libraries may also be known in the industry as packages. Then on top of the Java platform 120, 130, set of developers' applications 140 written in Java code may be executed.

Fig.2 shows a block diagram of a BD-ROM system of the invention. The system includes disc 200 and player 100. Player 100 includes hardware 110, Application Programming Interface 125 with Java libraries and Java VM 120. BD-Rom disc or blue ray disc 200 includes a loader application 210, Java objects 220, 230, 240, A/V data 260 and movie objects 250.

It must be noted that although the invention will be described in the context of the BD-Rom, the invention encompasses any current or future type of storage carrier, optical or not, that satisfies the specifics of the invention, whether the carrier is read-only, writable or re-writable.

As explained in the introductory portion, BD-ROM disc 200 may enable an interactive mode and a movie mode. The movie mode is illustrated by blocks 260 and 250 in Fig.2. Movie objects 250 may be associated with one or more playlists of A/V sequences stored in data storage portion 260 of disc 200 and movie objects 250 permit viewing and processing of A/V content 260. For example, a movie object 250 may point to a playlist of A/V clips, which form e.g. a movie. The user can select and play A/V clips or movies through titles in an index table. The index table may be located in a root menu and a portion of it may be displayable to the user for selection.

The interactive mode includes Xlets or Java objects 220, 230, 240 and loader application 210. Java objects 220, 230, 240 in addition to providing interactivity applications such as chat, menu listing, screen animation, gaming, internet browsing and the like may also be able to control the A/V playback. Java objects 220-240 and loader application 210 may be stored together on disc 200 into one single Jar file. A Jar file is a Java archive file, which may be compressed and loaded and decompressed automatically by Java VM 120. Such a Jar file may contain a manifest file, which describes the files comprised in the archive and indicates the file that contains loader application 210. Loader application 210 includes a main method and may be the only application stored on disc 200 that does so. Lifecyle of loader application 210 is intrinsically linked to disc 200 and is loaded at startup when disc 200 is inserted in player 100 and stopped when disc 200 is removed from player 100. Loader application consequently runs for the duration of disc 200. On the contrary, Java object 220-240 do not include a main method and may run for only part of the duration of disc 200.

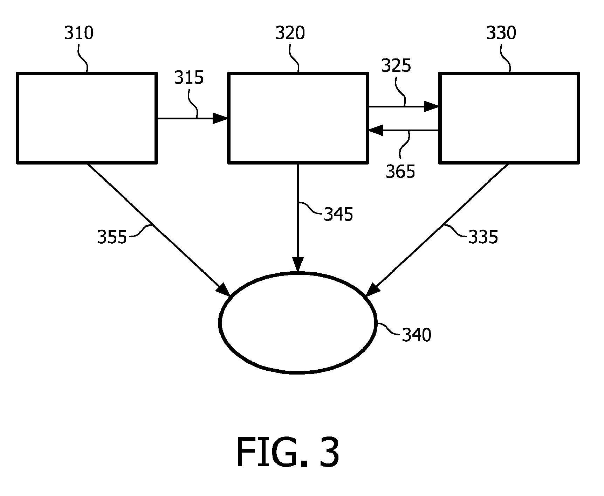

Java objects 220-240 may be able to start a playlist of A/V sequences, catch and process user operations and commands such as the user depressing remote control keys and ultimately transfer control to movie objects 250. In this embodiment, when control is transferred from Java object 220-240 to movie object 250, loader application 210 may kill or pause Java object 220-240 as will be explained hereinafter in reference to the lifecycle model illustrated in Fig.3. However, although the loader application 210 may cause Java object 220-240 to be in an inactive state 340, loader application 210 still runs on Java VM 120 that is not terminated.

Loader application 210 holds a list of all applications or Java objects 220-240 present on disc 200 and controls the respective lifecycles of all objects 220-240. Loader application 210 issues commands to object 220, 230 or 240 by calling its methods 215, 225, 235, 245 or 255 respecting application's or object's 220-240 states. Application Java object 220-240 may be in one of four states: initiated state 310, pause state 320, active state 330 and inactive or killed state 240 and the lifecycle of object 220-240 includes four methods 315-355 that can be invoked. Loader application 210 may first load Java object 220-240 in memory to loaded state 310, which is subsequently, automatically or by initialization and call to initialization method 315 by loader application 210, forced into paused state 320 where the application or object 220-240 is awaiting a command. Java object 220-240 in paused state 320 uses minimum resources from device 100 and Java VM 120, and does not present anything on screen or any output of device 100. From paused state 320, loader application 210 may call start method 325 and activates Java object 220-240 into active state 330 where the application associated with the Java object 220-240 is running. From active state 330, loader application 210 may pause Java object 220-240 back into paused state 320 by a call to a pause method 265 or kill active Java object 220-240 into state 340 by a call to destroy method 335. Loader application 210 may destroy Java object 220-240 from any of states 310, 320 or 330 or loader application 210 can wait until Java object 220-240 terminates on its own accord.

In an example embodiment, paused state 320 is implemented as follows. In paused state 320, Java object 220-240 must stop providing any service and might release resources and become quiescent. Releasing all resources includes releasing all user events and controls such as the remote control keys, keyboards, voice inputs, touch screen inputs and the like. Java object 220-240 may not hold exclusive access to these controls and resources and must not respond to events generated by them. Alternately, Java object 220-240 may hold temporary access to one or more A/V control resources. For example, any A/V content that was initiated as part of a playlist before Java object 220-240 was forced into paused state 320 may continue to run. However, Java object 220-240 may not start any new playlist or start presentation of new content, e.g. a next item on a playlist, or respond to events related to A/V content.

As mentioned above, a Java object may be brought back from its paused state 320 by a call to its start method 325. When brought back in the active state 330, Java object 220-240 reclaims all resources it released in paused state 320. This means that registering for user events, screen presentation is done in the start method 325 or initiated from the start method. Registering for access to A/V control may be performed after the start method and may be held until Java object 220-240 or Xlet is killed. In a computing environment, registering for user events is necessary in order to receive user commands and inputs. If no registration process is includes, a Java object will not be forwarded user inputs and thus, will not respond to them.

As mentioned above, control may be transferred from Java object 220-240 to movie object 250. When control is transferred from Java object 220-240 to movie object 250, loader application 210 may kill Java object 220-240 as explained hereinbefore in reference to Fig.3. However, although loader application 210 may cause Java object 220-240 to be inactive state 340, loader application 210 is still running on Java VM 120 that is not terminated. Loader application 210 runs in the background until control is transferred back to it, in which case it runs Java object 220-240 associated with the root menu, which shows a list of interactive titles. Alternately, a movie object 250 may show the menu of interactive titles instead of Java object 220-240 and when one interactive title is selected, control is transferred to loader application 210 and Java object 220-240 linked to the selected title is started.

Paused state 320 may also be required for when the user presses Menu during a Java title. When this happens, the menu is started and another title is started. If the user presses the Resume command, player 100 resumes the title that was initially playing when the first Menu call happened. If the user selects the Menu button again then the currently playing title is paused and the previous one is killed. Player 100 can have one paused Java object 220-240 that continues when the user commands to Resume. If a Java object 220-240 is paused when the user tries to pause a second Java object, the first paused Java object is killed so that the second one can be paused.

It must be understood that the invention encompasses running one application Java object 220-240 at a time. Thus, in an exemplary embodiment, loader application 210 at startup initiates Java object 220-240 that is associated with the display of an interactive menu. The user can select from among a number of interactive titles where each of the displayed title is linked to another Java object 220-240. When the user selects a title, loader application 210 kills or pauses the menu Java object 220-240 and starts Java object 220-240 linked to that title. New Java object 220-240 is, for example, associated with the playing of A/V content, a game or with the display of another menu listings comprising a number of selectable items or titles associated with another set of Java objects.

In another exemplary embodiment, a mechanism is required that signals which Java object 220-240 is allowed to run with which titles. Such mechanism is required to allow an easy implementation and to enable an accurate start and shutdown of a Java object. An index table may be defined that indicated which movie object(s) shall run when a title is selected. The index table stores indexes that store the links to the movie object 250 or Java objects 220-240.

In another embodiment, movie objects 250 may be implemented as Java objects performing equivalent functions and in such case, disc 100 provides for a full Java environment.

It will be evident to one skilled in the art that numerous other alternatives fall within the scopes of the appended claims. In this respect, the following closing remarks are made. There are numerous ways of implementing functions by means of items of hardware or software, or both. For example, the drawings presented here are diagrammatic, each only representing one embodiment. Thus, although a drawing shows different functions as different blocks, this by no means excludes that a single item of hardware or software carries out several functions. Nor does it exclude that a function is carried out by an assembly of items of hardware or software, or both.

## Claims

1. A method for playback of audio-video content from a storage carrier, the storage carrier comprising stored thereon
- audio-video content (260);
- movie objects (250) for playback of associated sequences of audio-video content (260);
- Java object applications (220-240) which, when executed on a Java virtual machine running in a playback system, enable displaying and processing of the audio-video content (260);
- an index table comprising titles for allowing an user to select and play associated movie objects (250), a portion of index table being displayable to the user for selection;
the index table further indicating for a linked title a Java object application linked to the linked title;
the method comprising steps of
- using the index table for displaying a menu comprising a list of titles for allowing an user to select and play the movie objects;
- receiving a selection from a user to play a movie object associated to the linked title;
- using the index table to determine the Java object application (220-240) linked to the linked title;
- starting the linked Java object application (220-240), the linked Java object application (220-240) enabling displaying the sequence of audio-video content (260) associated to the selected movie object.

2. A method according to claim 1, wherein the linked Java object application (220-240) comprises at least a pause method that when invoked cause the linked Java object application (220-240) to be in a paused state;
the method further comprising steps of
- invoking the pause method of the linked Java object application (250);
- continuing playback of the associated sequence of audio-video content (260) initiated by the linked Java object application (220-240) prior to invoking the pause method while ignoring events related to the associated sequence of A/V content (260) occurring after invoking the pause method.

3. A storage carrier comprising recorded thereon
- audio-video content (260);
- movie objects (250) for playback of associated sequences of audio-video content (260);
- Java object applications (220-240) which, when executed on a Java virtual machine running in a playback system, enable displaying and processing of the audio-video content (260);
- an index table comprising titles for allowing an user to select and play associated movie objects (250), a portion of index table being displayable to the user for selection;
wherein
the index table further indicating for a linked title a Java object application linked to the linked title.

4. A storage carrier according to claim 3, **characterized in that** the linked Java object application (220-240) comprises at least a pause method that when invoked cause the linked Java object application (220-240) to be in a paused state;
the linked Java object application (220-240) being adapted to continue playback of the associated audio-video content (260) initiated by the linked Java object application (220-240) prior to entering in the paused state,
the linked Java object application (220-240) further adapted to ignoring events related to the associated A/V content (260) occurring while the Java object application (220-240) is in the paused state.

5. A system for playback of audio-video content from a storage carrier according to claims 3 or 4, the system adapted to perform the methods of claims 1 or 2.

6. A method for playback of audio-video content from a storage carrier, the storage carrier comprising stored thereon
- audio-video content (260)
- a Java object application (220-240), the Java object application (220-240) comprising at least a pause method that when invoked cause the Java object application (220-240) to be in a paused state; the Java object application (220-240), when executed on a Java virtual machine running in a playback system, the Java object application (220-240) being enabled to start playback of associated sequences of audio-video content (260)
the method comprising
- executing the Java object application (220-240) comprising playback of the associated audio-video content (260);
- invoking the pause method of the Java object application;
- continuing playback of the associated audio-video content (260) initiated by the Java object application (220-240) prior to invoking the pause method while ignoring events related to associated A/V content (260) succeeding the invoking of the pause method.

7. A storage carrier comprising recorded thereon
- audio-video content (260)
- Java object applications (220-240) which, when executed on a Java virtual machine running in a playback system, it enables displaying and processing of the audio-video content (260); the Java object application (220-240) comprising at least a pause method that when invoked cause the Java object application (220-240) to be in a paused state; the Java object application (220-240), when executed on a Java virtual machine running in a playback system, the Java object application (220-240) being enabled to start playback of associated sequences of audio-video content (260)
the Java object application (220-240) adapted, in the pause state, to continue playback of the associated audio-video content (260) initiated prior to invoking the pause method while ignoring events related to associated A/V content (260).

8. A system for playback of audio-video content from a storage carrier according to claim 7, the system adapted to perform the method of claim 6.
